# EUROPEAN PATENT APPLICATION

(11) **EP 2 888 943 A2**
(43) Date of publication of application: **01.07.2015**
(21) Application number: 13778386.6
(22) Date of filing: 15.04.2013
(51) Int. Cl.: A23B 7/144, A23B 7/152

(54) **METHOD AND CONVEYOR BELT APPARATUS FOR THE CONTINUOUS GASIFICATION OF CRANBERRIES WITH S02 GAS**

(30) Priority: 20.04.2012 CL 10132012
(71) Applicant: Raab Camalez, Cristian Alberto, Santiago (CL)
(72) Inventor: Raab Camalez, Cristian Alberto, Santiago (CL)
(74) Representative: Lorente Berges, Ana
(86) International application number: PCT/CL2013/000023
(87) International publication number: WO 2013/155640

(57) **Abstract**

The invention relates to a method for continuous gasification with SO₂ gas, using a conveyor belt apparatus that moves along five stations, each station designed for a specific process and having a pre-determined space or "module" where its process is carried out. The conveyor belt is programmed to alternately advance module 1 and stops in the stations for a certain amount of time or a "break" so that the processes can be simultaneously verified in the five stations. The invention uses the instability of the SO₂ gas in relation to water, a phenomenon which is accentuated and accelerated according to its lowest temperature, reaching its maximum potential at 0ºC. The instability of the gas refers to the fact that the gas is absorbed by the water, forming a sulfurous acid solution. According to the method, the fruit is first cooled and is the exposed to the environment so that the humidity condenses thereon, said cold humidity causing a rapid and total absorption of the SO₂ gas which is dispersed in the environment. The method provides for a sequence in three continuous stations: a refrigeration station, a humidifying station and a gasification station.

## Description

### FIELD OF APPLICATION

Traditional preservation of exported blueberries comprises gasification with SO₂ gas, performed in hermetic chambers and in their harvesting containers (a similar technique to that applied to table grapes). Invention patent CL 32781 comprises gasification of grapes with SO₂ gas in the export box itself (non-hermetic), having first ascertained that the gas is absolutely unstable and strongly attracted by humidity. The type of packaging of the grape provides for installation within a PERFORATED polyethylene bag, which is in turn placed within the box. The grape, thus packaged, provides considerable humidity within the bag (around 92% RH), much higher than the ambient humidity. When an appropriate dose of SO₂ is injected into the bag it does NOT escape through the perforations as it encounters greater humidity there than outside. After 30 to 40 minutes the dose is fully absorbed, prioritising the tiny blemishes in the grape (a medium for the cultivation of fungi). A study at the PUC (1989) demonstrated that the grape was protected and that the method was entirely ecological.

An extension of this method serves to ascertain the outstanding acceleration and efficiency of the attraction of the SO₂ gas when the fruit was pre-chilled (not necessarily to 0° C), and further still if a film of humidity was allowed to condense on it.

The attraction is such that by using a clamshell container, highly ventilated for the purpose of chilling the blueberries, this furthermore allows them to be humidified, and offers superlative access for the SO₂ gas, without the need to inject it into the containers. The containers with the fruit inside simply need to be exposed within tunnels which successively provide cold, humidity and SO₂ gas. Furthermore, the ambient humidity is typically sufficient to avoid the need for recourse to a tunnel for this purpose.

By definition, the tunnels are not hermetic. However, this technology, thanks to be powerful attraction of the SO₂ for the cold humidity of the fruit pre-packaged in clamshells, prevents it from escaping to the surrounding environment.

In order to integrate the three processes (chilling, humidification and gasification) a design is conceived for a conveyor belt functioning like a railway, which progresses and successively halts at different stations. One of the aforementioned specific processes is performed at each station. This likewise entails the inclusion at the start of a "loading station", and at the end of an "offloading station".

The conveyor belt is electronically and automatically activated to advance and halt alternately. Each advance covers the distance of one module, before then halting for a pause. The mechanical control of the belt is equipped with an offset variator by means of an Electric Reduction Motor, the speed of which can be programmed so as then to halt for an established pause.

A central desk or station operates and controls the entire complex, and of course also control of the conveyor belt (variator reduction gear motor), speed of advance, pause time, etc. Centralisation of all operations allows for automatic functioning of the entire complex, controlled by one single operator.

This "descriptive account" does not include the issue of the fruit chilling method, as this is a widely known and used technology, previously consulted with a specialist. The assumption regarding humidification is that mere exposure of the fruit to the relative ambient humidity is sufficient. If this were not the case, humidification of the fruit can be fully controlled within a tunnel, by adding humidity by means of vapour, or otherwise by using hygroscopic salts to remove it.

Nor are details given of the issue of SO₂ gasification, a speciality with which I have been fully familiar for more than 20 years (according to invention patent CL No. 38271, 1992). I can also handle both electronic programs and/or PLCs to establish automation of the entire complex.

A number of sensors, instruments and alarms are included to alert a possible breach of the parameters established for cold, humidification and SO₂ gasification, including environmental leakage.

The aim of this invention is to achieve continuous and automatic gasification of the fruit with pre-chilling as a "bonus".

### BRIEF DESCRIPTION OF THE FIGURES

Figure 1 presents a graph of SO₂ solubility in water.
Figure 2 presents the successive process of application to the fruit to achieve rapid and total gasification, without leaks or losses to the surrounding environment: chilling (to 0° C), humidification, gasification (appropriate and precise dose).
Figure 3 presents the infrastructure (layout) corresponding to a conveyor belt devised in modular sections (fixed lengths) where the five stations, each of which is intended for a defined process, are located.
Figure 4 presents a schematic view with an example of gasification in clamshell containers with blueberry fruit in packaged containers which have been subjected to the fruit chilling, humidification and gasification process.

### DESCRIPTION OF THE INVENTION FOR THE GASIFICATION METHOD

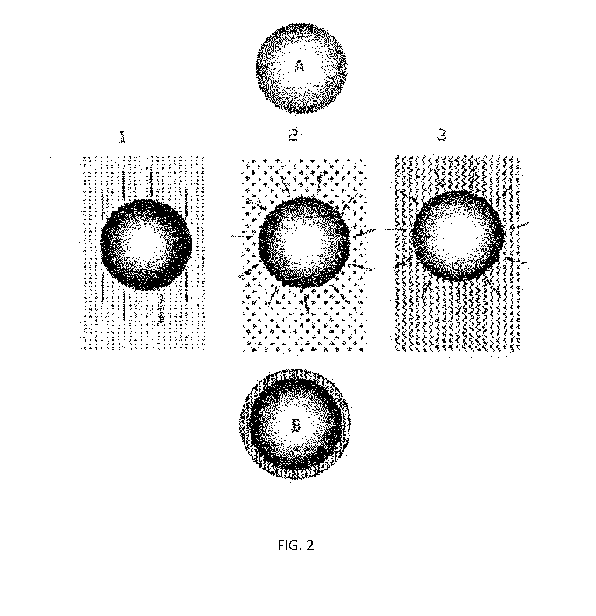

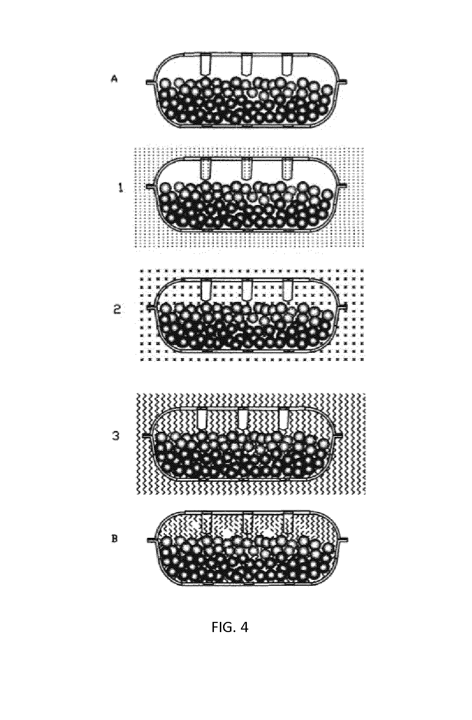

According to figures 2 and 4, this method optimises the conditions of the fruit for complete and rapid gasification (total consumption of the gas, with no ambient emission) in a continuous, automatic process. The method of the invention comprises firstly pre-chilling of the fruit (1) close to 0° C and humidification of the fruit (2) prior to application of gasification of the fruit (3).

One precondition is that the fruit be pre-packaged in clamshells (A), very thin, lightweight and ventilated plastic containers (4). These characteristics are supplemented by non-porosity, non-absorption of humidity or SO₂ gas, and consumption of practically no cold in the chilling process (1). It does not "compete" with the fruit in the required processes.

The fruit, pre-packaged in clamshells (definitive packaging for commercial sale) is placed on a conveyor belt at rest (5).

This conveyor belt (5) is devised to travel through the "stations" or modules (6) where the different processes are implemented as required. Each module is allocated to a specific process.

The first station will thus be for loading (pre-established fruit loading), performed during one pause (pre-established time).

When the pause period is completed, the conveyor belt (5), now laden (7) is automatically activated, advancing the distance of one module, positioning the fruit at the chilling module station (6), comprising an isolated tunnel implemented to chill the fruit. If the chilling requirements are particularly demanding, a double module station may be established.

The process then advances to a third module (8) (open or in a tunnel) where the recently chilled fruit will condense humidity on its skin. (If the relative ambient humidity is very low, a source of water vapour could be implemented at this station.)

Upon completion of the humidification pause, the belt will automatically advance to the fourth station (9), implemented with a tunnel for gasification (with SO₂ gas). This station comprises a very narrow tunnel (with little free space), such that a dose of gas is injected halfway along its length when the belt halts (at the start of the pause). According to our experience, the SO₂ gas is powerfully attracted (hydrophilia) by the frozen humidity (close to 0° C) applied to the skin of the fruit in the processes of the previous two stations (pre-chilling and humidification).

According to lengthy and substantial experimentation, the dose will be around 6 cm³ of gas (at ambient pressure) for each kilogram of fruit treated, sufficient to inhibit or destroy botrytis fungi and ensure that there is no emigration or contamination of the environment (100% ecological condition). At the entrance and exit of the gasification tunnel gas sensors will be fitted, to activate (sound and/or light) alarms in the event of leakage.

Following conclusion of gasification, the conveyor belt (5) moves on to the fifth and final station (10) where the fruit is offloaded. Throughout the process use is made of each pause to load fruit at the first station. This means that the process is continuous, although the advance of the conveyor belt (5) is intermittent.

This invention has been developed in order furthermore to exploit not only the pathogenic properties of SO₂ gas, but also its dynamic as an unstable gas, when released in gaseous state.

As the objective is to sanitise the blueberries, the method and system is applicable to grapes and/or any other species requiring an identical or similar process, with adjustment of the temperature, humidity and dose.

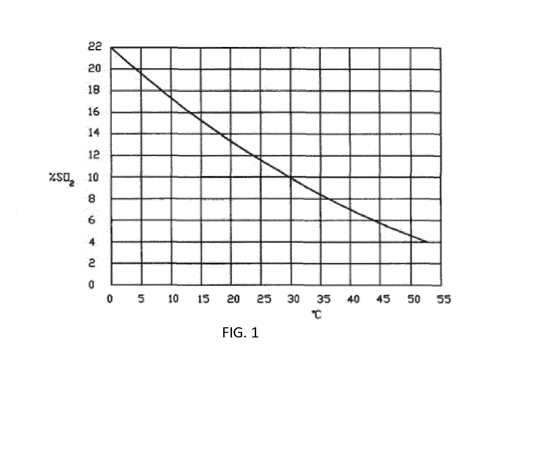

Priority will be given to the rational and efficient use of the SO₂ gas by exploiting the fact that its Brownian effect is polarised towards the humidity present in its environment through its hydrophilic potential, optimised at low temperatures. The graph according to Figure 1 indicates the solubility of SO₂ gas in water: at 0° Celsius this is 22%.

An essential part of this invention is the "preventive" and "automatic" gasification of blueberries with SO₂ gas, with recourse to optimal conditions of efficiency for the dose of gas provided to be sufficient and 100% consumed (so as not to contaminate the environment).

Currently optimal conditions are obtained:
a) By establishing a precise quantity of fruit (always identical) to be processed at each station or Module.
b) The fruit packaged in plastic containers (4) (fixed weight system) which are lightweight and ventilated. Those currently used (clamshells) comply with these requirements.
c) Pre-chilling (1) of the fruit to close to 0° C.
d) (Exposure of the cold fruit to the environment (or a specifically devised enclosure) for the humidity to condense on the skin (a slight film).
e) Provide precise selected doses of SO₂ gas (range within 15 to 30 mg per kilogram of fruit loaded at each MODULE), and,
f) Entry to and exit from the gasification tunnel equipped with SO₂ sensors to alert any leak of gas into the environment.

The fruit intended for processing in this invention has already been pre-prepared (A): cleaned, selected and packaged complying with commercial "standards".

### DETAILED DESCRIPTION OF THE CONTINUOUS FRUIT GASIFICATION CONVEYOR BELT APPLICATION

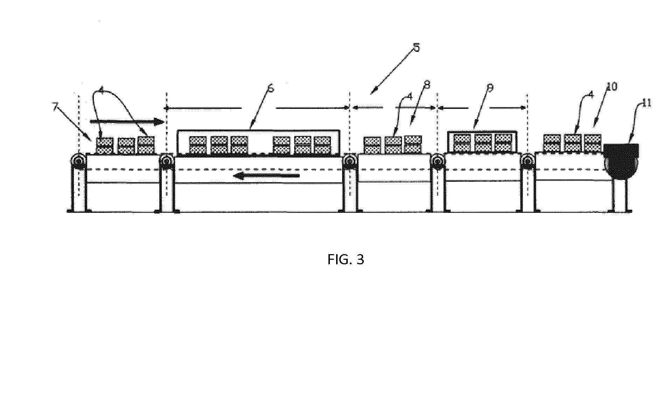

According to Figure 3, a loading station (Module 7) of the conveyor belt (5) in its at-rest state (pause) is available to have fruit packaged in clamshells (4) with a fixed weight installed on it. Following conclusion of the pause period, the conveyor belt (5) moves on through the length of Module 1, revealing a new space for loading.

Chilling station (Module 6), comprising a tunnel conditioned as a chilling chamber, where the pre-loaded fruit is located. It will be stationed here during the programmed pause to achieve the required temperature. If the time is greater, following the pause the conveyor belt (5) will then move on to a module or station.

Humidification station (Module 8) where the pre-chilled fruit remained. Normally, when this fruit is exposed to the atmosphere the relative humidity in the air will be sufficient to condense on the skin. If this were not the case, it would be necessary to condition a tunnel there into which vapour would be fed from a water boiler.

Upon conclusion of the pause period, the conveyor belt (5) advances as far as the next module.

Gasification station (Module 9) comprising a tunnel conditioned as a gasification chamber. A precise dose of SO₂ gas (defined in accordance with the pre-established mass of fruit, automatically prepared) is injected at the centre of the tunnel at the very instant when the conveyor belt comes to a halt. As with any gas released into the atmosphere, the SO₂ expands into its surroundings, although its trajectory will be attracted and rapidly captured by the damp and frozen surfaces. At the exit from each end of the tunnel, SO₂ gas sensors are installed. If any leaks out of the tunnel are detected a small ventilator will be activated to aspirate this environment (tunnel mouths) to recycle it within. There is a fairly extensive range of proven doses of SO₂ (100 to 300 ce) to protect up to 10 kg of fruit without saturating the cold humidity previously provided by the system. The gasification process is the key point for the intended purposes. The dose applied must lie within the range which inhibits botrytis and be 100% absorbed by the humidity and its low temperature, within the programmed pause period.

Offloading station (Module 10) at the end of the conveyor belt where the packaged fruit (4) emerges, to be exposed to human access in order to be removed, allowing the conveyor belt (5) to return to the loading position.

A motor-variator-reduction gear (11) installed at the end of the conveyor belt in order to operate it. It operates in accordance with an electronic program which includes a gentle start-up, followed by acceleration, deceleration and a gentle halt to advance to the Module (7) following a pre-established time period. When the belt halts, a pause of a likewise preset time begins. During the process the speeds can be accelerated or otherwise reduced in accordance with control of the objectives.

Control booth (not shown). All controls are centralised here, the main control being SO₂ gasification (total consumption of each dose, without environmental emission). It will be possible to alter the speed of the conveyor belt from here (increase production): alter the chilling efficiency, alter the SO₂ dosage, alter the humidification and many other adjustments.

## Claims

1. SO₂ gasification method to sanitise blueberries and fruit, **CHARACTERISED in that** the fruit is first chilled (1) and humidified (2), achieving optimal conditions for the absorption of the SO₂ gas (3), swiftly and effectively.

2. SO₂ gasification method according to claim 1 **CHARACTERISED in that** the dose of SO₂ gas is around 6 cm³ (at atmospheric pressure) per kilogram of fruit treated, sufficient to inhibit or destroy botrytis fungi and ensure that there is no egress to or contamination of the environment (100% ecological condition), applied at the entrance and exit of a gasification tunnel of a conveyor belt.

3. SO₂ gasification method, according to claims 1 and 2, **CHARACTERISED in that** it is necessary to expose the chilled fruit to the atmosphere (or a specifically devised enclosure) for humidity to condense on the skin (a slight film) and provide precise, selected doses of SO₂ gas, within a range of 15 to 30 mg per kilogram of fruit loaded.

4. SO₂ gasification method, according to claim 1, **CHARACTERISED in that** application of the appropriate dose controls (avoids) any leak of gas into the environment.

5. SO₂ gasification method, according to claim 1, **CHARACTERISED in that** the location of execution does not require hermetic sealing.

6. SO₂ gasification method, according to claim 1, **CHARACTERISED in that** the gas supply is consumed in its entirety (100%) with no losses.

7. SO₂ gasification method, according to claim 1, **CHARACTERISED in that** the chilling temperatures, humidity and SO₂ gas dose can be varied at will, in accordance with the preferences of the specialists.

8. Gasification method **CHARACTERISED in that** it is applicable and adaptable to other fruits and species requiring preservation against fungi.

9. Continuous SO₂ gasification apparatus, **CHARACTERISED in that** it comprises a conveyor belt which is first loaded with the fruit, chilled and then humidified, prior to gasification and offloading, according to claim 1.

10. Gasification apparatus, according to claim 9, **CHARACTERISED in that** the conveyor belt is programmed to advance by sections (spaces) of one module in order to halt for a pause (defined time), and so on successively.

11. Gasification apparatus, according to claim 9, **CHARACTERISED in that** the system of advances and pauses of the conveyor belt creates stations (where the modules are staged), allowing for formalisation, in the pre-established order according to claims 1 and 7, of the five required processes.

12. Gasification apparatus, according to claim 9, **CHARACTERISED in that** the conveyor belt is loaded during the halt pause, with the packaged fruit (of a fixed weight) occupying the loading module, the first space, where the conveyor belt begins.

13. Gasification apparatus, according to claim 9, **CHARACTERISED in that** the loaded module of the conveyor belt, upon conclusion of the pause period, advances to the second module where it is once again halted, this time to undergo the refrigeration process, while the first module (unoccupied) receives a new load.

14. Gasification apparatus, according to claim 9, **CHARACTERISED in that** with each advance the modules are all left with the same load of packaged fruit, each of them simultaneously undergoing the corresponding process, in accordance with the pre-established order and during the programmed pause.

15. Gasification apparatus, according to claim 9, **CHARACTERISED in that** it represents a continuous and automated process, except for loading and offloading.

16. Gasification apparatus, according to claim 9, **CHARACTERISED in that** as permitted by experiments, in accordance with favourable environmental relative humidity conditions, the explicit humidification process may be eliminated (elimination of one module).

17. Gasification apparatus, according to claim 9, **CHARACTERISED in that** according to tests, if one of the processes (generally chilling) requires more time (a pause), the corresponding module can be duplicated, and the fruit will remain within the process for two pauses, in addition to the time of one advance movement.

18. Gasification apparatus, according to claim 9, **CHARACTERISED in that** it incorporates an isolated chilling tunnel, within which the conveyor belt circulates with its load of fruit being processed.

19. Gasification apparatus, according to claim 9, **CHARACTERISED in that** the conveyor belt is operated by a motor with a reduction gear and offset variator (electrical), allowing for fine adjustment of the speed.

20. Gasification apparatus, according to claim 9, **CHARACTERISED in that** all complexity of the system is programmed at one single command and control desk, including warning sensors, instruments and alarms in the event of misalignments of the established parameters for chilling, humidification and SO₂ gasification, including environmental leakage.
